# EUROPÄISCHE PATENTANMELDUNG

(11) **EP 3 725 915 A1**
(43) Veröffentlichungstag der Anmeldung: **21.10.2020**
(21) Anmeldenummer: 19170179.6
(22) Anmeldetag: 18.04.2019
(51) Int. Cl.: C25B 1/00, C25B 3/04, C25B 11/02, C25B 9/08

(54) **VORRICHTUNG UND VERFAHREN ZUM SPEICHERN ELEKTRISCHER ENERGIE**

(71) Anmelder: Siemens Aktiengesellschaft, 80333 München (DE)
(72) Erfinder: Engelbrecht, Andreas, 95503 Hummeltal (DE); Fleischer, Maximilian, 85635 Höhenkirchen (DE); Hämmerle, Martin, 95447 Bayreuth (DE); Magori, Erhard, 85622 Feldkirchen (DE); Moos, Ralf, 95447 Bayreuth (DE); Wiesner-Fleischer, Kerstin, 85635 Höhenkirchen-Siegertsbrunn (DE)

(57) **Zusammenfassung**

Die Erfindung betrifft einen Kohlenstoffdioxid-Elektrolyseur zum elektrochemischen Umsetzen von Kohlenstoffdioxid oder Kohlenstoffmonoxid zu wenigstens einem Wertprodukt mit einem Anodenraum mit einer Anode, einem Kathodenraum mit einer ersten Kathode und einer zweiten Kathode und einer Membran zwischen dem Anodenraum und dem Kathodenraum. Die erste und die zweite Kathode sind auf einem Substrat angeordnet, wobei der elektrische Widerstand des Substrats höher ist, als der elektrische Widerstand der ersten Kathode und der elektrische Widerstand der zweiten Kathode. Ein Edukt, insbesondere Kohlenstoffdioxid, wird entlang des Substrates zugegeben. Kohlenstoffdioxids wird zu einem Zwischenprodukt an der ersten Kathode umgesetzt. Das Zwischenprodukt wird zu einem zweiten Wertprodukt an der zweiten Kathode umgesetzt. Das zweite Wertprodukt wird aus dem Kohlenstoffdioxid-Elektrolyseur herausgeführt.

## Beschreibung

Die Erfindung betrifft eine Vorrichtung und ein Verfahren zum Speichern elektrischer Energie durch Umwandeln von Kohlenstoffmonoxid und Kohlenstoffdioxid in Wertprodukte.

Die Stromerzeugung schwankt mit zunehmendem Anteil an Strom aus erneuerbaren Energien während des Tagesverlaufs. Um ein Überangebot an Strom in Zeiten mit viel Sonne und starkem Wind bei niedriger Nachfrage nach Strom ausgleichen zu können, benötigt man regelbare Kraftwerke oder Speicher, um diese Energie zu speichern.

Eine der derzeitig angedachten Lösungen ist das Umwandeln von elektrischer Energie in Wertprodukte, die insbesondere als Plattformchemikalien, insbesondere Methan, Ethan, Ethen, sauerstoffhaltige Kohlenwasserstoffe oder Synthesegas, welches Kohlenstoffmonoxid und Wasserstoff umfasst, dienen können. Eine mögliche Technik zur Umwandlung der elektrischen Energie in Wertprodukte stellt die Elektrolyse dar.

Die Elektrolyse von Wasser zu Wasserstoff und Sauerstoff stellt eine im Stand der Technik bekannte Methode dar. Aber auch die Elektrolyse von Kohlenstoffdioxid zu Wertstoffen, insbesondere zu Kohlenstoffmonoxid wird seit einigen Jahren erforscht und es gibt Bemühungen, ein elektrochemisches System zu entwickeln, das die elektrochemische Reduktion von Kohlenstoffdioxid zu Wertprodukten entsprechend des wirtschaftlichen Interesses reduzieren kann. Aktuell werden ca. 80 % des weltweiten Energiebedarfs durch die Verbrennung von fossilen Brennstoffen gedeckt, deren Verbrennungsprozesse eine weltweite Emission von etwa 34000 Millionen Tonnen Kohlenstoffdioxid in die Atmosphäre pro Jahr verursacht. Kohlenstoffdioxid gehört zu den sogenannten Treibhausgasen, deren negative Auswirkungen auf die Atmosphäre und das Klima diskutiert werden. Eine Verwertung dieses Kohlenstoffdioxids ist daher wünschenswert.

Typischerweise werden zur elektrochemischen Umwandlung von Kohlenstoffdioxid in Wertprodukte Elektrolysevorrichtungen eingesetzt, die einen geeigneten Elektrolyten, eine erste Arbeitselektrode als Kathode und eine zweite Elektrode als Anode umfassen. Mittels der kathodenseitigen Arbeitselektrode, welche üblicherweise mit einem Katalysator oder einer Katalysatormischung beschichtet ist, wird in einem Prozess Kohlenstoffdioxid zu Wertstoffen, insbesondere zu Kohlenstoffmonoxid, Methan, Ethan, Ethen, Alkohol, Aldehyd oder Säuren umgesetzt. Während des Umsetzens laufen komplexe mehrstufige Reaktionsprozesse an der Arbeitselektrode ab. Bei einem konstanten Betriebspunkt, der eine ausreichend hohe Überspannung gewährleistet, finden viele Reaktionen nebeneinander statt.

Nachteilig weist der Prozess dadurch eine geringe Selektivität für das gewünschte Wertprodukt auf. Eine hohe Überspannung an der Arbeitselektrode hat weiterhin den Nachteil, dass als Konkurrenzreaktion nicht erwünschter Wasserstoff an der Arbeitselektrode entsteht.

Aufgabe der vorliegenden Erfindung ist es daher, eine Vorrichtung und ein Verfahren anzugeben, welches eine hohe Selektivität für einen gewünschten Wertstoff aus einer elektrochemischen Umsetzung von Kohlenstoffdioxid aufweist.

Die Aufgabe wird erfindungsgemäß mit einem Kohlenstoffdioxid-Elektrolyseur gemäß Anspruch 1 und einem Verfahren zum Betreiben eines Kohlenstoffdioxid-Elektrolyseurs gemäß Anspruch 11 gelöst.

Der erfindungsgemäße Kohlenstoffdioxid-Elektrolyseur umfasst einen Anodenraum mit einer Anode. Er umfasst weiterhin einen Kathodenraum mit einer ersten Kathode und einer zweiten Kathode. Zwischen dem Anodenraum und dem Kathodenraum ist eine Membran angeordnet. Die erste und die zweite Kathode sind auf einem Substrat angeordnet. Der elektrische Widerstand des Substrats ist höher als der elektrische Widerstand der ersten Kathode und höher als der elektrische Widerstand der zweiten Kathode.

Das erfindungsgemäße Verfahren zum Betreiben eines Kohlenstoffdioxid-Elektrolyseurs umfasst zunächst das Bereitstellen eines Kohlenstoffdioxid-Elektrolyseurs mit einem Anodenraum mit einer Anode, einem Kathodenraum mit einer ersten Kathode und einer zweiten Kathode und einer Membran zwischen dem Anodenraum und dem Kathodenraum. Die erste und die zweite Kathode sind auf einem Substrat angeordnet, wobei der elektrische Widerstand des Substrats höher ist, als der elektrische Widerstand der ersten Kathode und der elektrische Widerstand der zweiten Kathode. In anderen Worten weisen die erste und die zweite Kathode eine höhere Leitfähigkeit als das Substrat auf. Das Edukt, insbesondere Kohlenstoffdioxid, wird zu dem Substrat und somit auch zur ersten Kathode geführt. An der ersten Kathode erfolgt das Umsetzen des Edukts zu einem ersten Zwischenprodukt. Das Zwischenprodukt wird an der zweiten Kathode zu einem Wertprodukt umgesetzt. Das Wertprodukt wird aus dem Kohlenstoffdioxid-Elektrolyseur herausgeführt.

Erfindungsgemäß gibt es zwei kathodenseitige Arbeitselektroden. Der Kathodenraum umfasst erfindungsgemäß eine erste Kathode und eine zweite Kathode, welche in räumlicher Nähe, in anderen Worten in demselben Kathodenraum, auf demselben Substrat aufgebracht sind. Es ist möglich diese erste Kathode und die zweite Kathode bei unterschiedlichen Betriebspunkten zu betreiben. Somit ist es vorteilhaft möglich, die Reaktion zu begünstigen, die für ein gewünschtes Zwischenprodukt und ein gewünschtes Wertprodukt besonders bevorzugt sind. Es ist somit vorteilhaft möglich die Produktverteilung über den Gesamtprozess zu steuern. Vorteilhaft kann die Ausbeute des Wertprodukts durch das Umsetzen des Edukts im selben Kathodenraum erhöht werden.

In einer vorteilhaften Ausgestaltung und Weiterbildung der Erfindung umfasst die erste Kathode ein erstes katalytisches Material und die zweite Kathode ein zweites katalytisches Material. Die Zusammensetzungen des ersten katalytischen Materials und des zweiten katalytischen Materials sind unterschiedlich. In anderen Worten ist es möglich, das Katalysatormaterial in Abhängigkeit des gewünschten Zwischenprodukts bzw. Wertprodukts auszuwählen. Somit kann die Produktverteilung über den Gesamtprozess vorteilhaft gezielt gesteuert werden, was vorteilhaft die Selektivität der Gesamtreaktion erhöht. Vorteilhaft wird durch die hohe Selektivität auch die Gesamteffizienz der Produktherstellung erhöht.

In einer weiteren vorteilhaften Ausgestaltung und Weiterbildung der Erfindung ist das erste und/oder das zweite katalytische Material zusammengesetzt aus der Gruppe der folgenden Elemente: Silber, Gold, Zink, Zinn, Wismuth und/oder Kupfer. Besonders vorteilhaft umfasst die erste Kathode Silber, Gold und/oder Zink. Die zweite Kathode umfasst besonders vorteilhaft Kupfer. Es ist vorteilhaft möglich, an der ersten Kathode aus Kohlenstoffdioxid Kohlenstoffmonoxid herzustellen, welches ein Zwischenprodukt darstellt. Das Zwischenprodukt Kohlenstoffmonoxid kann dann an der zweiten Kathode, die besonders bevorzugt Kupfer umfasst, zu Kohlenwasserstoffen umgesetzt werden. Zwischenprodukte können alternativ oder zusätzlich zu Kohlenstoffdioxid auch Kohlenstoffverbindungen sein, welche eine Oxidationszahl aufweisen, die kleiner als die Oxidationszahl von Kohlenstoffdioxid und größer als die Oxidationszahl des Endprodukts ist. Insbesondere können Ameisensäure oder Formiate Zwischenprodukte sein. Besonders bevorzugt weisen die erste Kathode und die zweite Kathode unterschiedliche Betriebspunkte, also auch unterschiedliche Überspannungen, auf. Somit werden vorteilhaft Kohlenwasserstoffe in einem Kohlenstoffdioxid-Elektrolyseur an zwei Arbeitselektroden mit hoher Selektivität und hoher Effizienz erzeugt.

In einer weiteren vorteilhaften Ausgestaltung und Weiterbildung der Erfindung weist das Substrat eine Leitfähigkeit von weniger als 14 S/m, insbesondere von weniger als 11 S/m auf. Vorteilhaft wird dadurch ein elektrischer Kurzschluss, insbesondere bei unterschiedlichen Betriebspunkten der ersten und der zweiten Kathode, zwischen der ersten Kathode und der zweiten Kathode vermieden.

In einer weiteren vorteilhaften Ausgestaltung und Weiterbildung der Erfindung ist das Substrat als eine Gasdiffusionsschicht ausgebildet. Besonders vorteilhaft sind das Substrat, die erste Kathode und die zweite Kathode als eine Gasdiffusionselektrode ausgestaltet. Die Gasdiffusionselektrode weist dann eine elektrisch isolierte Schicht, also das Substrat, auf. Diese Schicht kann zwischen den Kathoden angeordnet sein. Alternativ können beide Kathoden auf einer Seite des Substrates angeordnet sein. Besonders vorteilhaft wird das Kohlenstoffdioxid an der Gasdiffusionselektrode reduziert. An dieser Gasdiffusionselektrode kann vorteilhaft eine DreiPhasen-Reaktion stattfinden. Das Kohlenstoffdioxid liegt gasförmig vor, der Katalysator fest und der Elektrolyt flüssig. Dies ermöglicht eine besonders effiziente Reaktion an dem Katalysator. Der Einsatz einer Gasdiffusionselektrode hat weiterhin den Vorteil, dass die Edukte gasförmig an die Gasdiffusionselektrode gelangen können. Somit ist ein besserer Stofftransport der Edukte an die Elektrode gegenüber einer Flüssigkeit gegeben. Weiterhin wird die Eduktbereitstellung vorteilhaft nicht nur eine maximale Löslichkeit des Edukts in einer Flüssigphase limitiert.

In einer weiteren vorteilhaften Ausgestaltung und Weiterbildung der Erfindung sind die erste Kathode und die zweite Kathode auf derselben Seite des Substrates angeordnet. In anderen Worten ist die Gasdiffusionsschicht lateral strukturiert. Die Elektrolysezelle kann dann im sogenannten Parallel-Fließ-Modus, englisch "Flow-By Modus", betrieben werden. Das heißt, das gasförmige Eduktgas wird parallel zu der Gasdiffusionsschicht geführt. Das Edukt, insbesondere Kohlenstoffdioxid, fließt im Flow-By Modus entlang der Gasdiffusionsschicht. Es diffundiert in die Gasdiffusionsschicht hinein und wird an der ersten Kathode zum Zwischenprodukt umgesetzt. Es strömt dann weiter an derselben Seite zur zweiten Kathode und wird dort zum Wertprodukt umgewandelt. Durch den Fluss entlang der Gasdiffusionsschicht werden die ausdiffundierenden Wertprodukte mitgenommen und vorteilhaft aus dem Kohlenstoffdioxid-Elektrolyseur ausgetragen. Vorteilhaft müssen die Wertprodukte dann nicht vom Elektrolyten abgetrennt werden.

In einer weiteren vorteilhaften Ausgestaltung und Weiterbildung der Erfindung sind die erste Kathode und die zweite Kathode auf entgegengesetzten Seiten des Substrates angeordnet. Die Elektrolysezelle kann dann im Durchfluss-Modus, englisch "Flow-through Modus", betrieben werden. In anderen Worten wird das gasförmige Eduktgas orthogonal zur Gasdiffusionsschicht auf diese zu geführt. Im Durchfluss-Modus wird Kohlenstoffdioxid zunächst an einer in Strömungsrichtung ersten Seite der Gasdiffusionsschicht an der ersten Kathode zu dem Zwischenprodukt umgesetzt. Anschließend wird das Zwischenprodukt und nicht umgesetztes Kohlenstoffdioxid durch die Gasdiffusionsschicht hindurchgedrückt, wo auf einer in Strömungsrichtung zweiten Seite der Gasdiffusionsschicht die zweite Kathode angeordnet ist. An der zweiten Kathode wird das Zwischenprodukt zu dem Wertprodukt umgesetzt. Das Wertprodukt tritt dann in Form von Bläschen in den Elektrolyten ein, der in dem Kathodenraum angeordnet ist. Das Wertprodukt wird dann mit dem Elektrolyten aus dem Kohlenstoffdioxid-Elektrolyseur herausgeführt. Vorteilhaft sind in diesem Modus eine Vielzahl von möglichen Ausgestaltungen der Separation und der Kontaktierung der ersten und der zweiten Kathode möglich.

In einer weiteren vorteilhaften Ausgestaltung und Weiterbildung der Erfindung ist die erste und/oder zweite Kathode als Kammelektrode ausgestaltet. In anderen Worten weisen die erste und/oder zweite Kathode eine Struktur auf, die ähnlich zu einem Kamm, eine Hauptachse aufweist, an der Querstrukturen, ähnlich den Zinken eines Kammes, befestigt sind. In anderen Worten könnte man die Form der Elektroden auch als Fingerelektroden beschreiben. Es ist somit vorteilhaft möglich die erste und/oder die zweite Kathode über das gesamte Substrat gleichmäßig anzuordnen. Dies führt wiederum zu einer gleichmäßigen Reaktion, was die Effizienz des Kohlenstoffdioxid-Elektrolyseurs vorteilhaft erhöht.

In einer weiteren vorteilhaften Ausgestaltung und Weiterbildung der Erfindung weisen die erste Kathode und die zweite Kathode eine Kammstruktur auf. Die beiden Kammstrukturen sind ineinander verschränkt angeordnet, das heißt die Kammstrukturen sind interdigital angeordnet. In anderen Worten bedeutet das, dass die Querverstrebungen der Elektroden zueinander versetzt, also abwechselnd, angeordnet sind. In anderen Worten sind die Elektroden analog zu verschränkten Fingern ineinander abwechselnd angeordnet. Vorteilhaft sind die Elektroden somit örtlich nah zueinander angeordnet. Sie können aber weiterhin elektrisch getrennt kontaktiert sein. Somit ist es möglich sowohl das Edukt als auch das Zwischenprodukt gleichmäßig über das Substrat hinweg auf die Arbeitselektroden zu verteilen. Dies ermöglicht eine hohe Selektivität der Gesamtreaktion in dem Kohlenstoffdioxid-Elektrolyseur.

In einer weiteren vorteilhaften Ausgestaltung und Weiterbildung der Erfindung sind die erste Kathode und die zweite Kathode getrennt voneinander kontaktiert. Insbesondere können die erste Kathode und die zweite Kathode somit bei unterschiedlichen Überspannungen betrieben werden. Somit können die erste Kathode und die zweite Kathode unabhängig voneinander bei unterschiedlichen Betriebspunkten betrieben werden. Der Betriebspunkt kann vorteilhaft in Abhängigkeit einer ersten Reaktion vom Edukt zum Zwischenprodukt und einer zweiten Reaktion vom Zwischenprodukt zum Wertprodukt gewählt werden. Somit kann vorteilhaft die Selektivität der ersten Reaktion und der zweiten Reaktion gezielt gesteuert werden. Dies erhöht vorteilhaft die Effizienz der Gesamtreaktion des Kohlenstoffdioxid-Elektrolyseurs.

In einer weiteren vorteilhaften Ausgestaltung und Weiterbildung der Erfindung werden die erste und die zweite Kathode unabhängig voneinander gesteuert. Es ist insbesondere möglich eine der Kathoden dauerhaft, die andere abwechselnd oder gepulst zur anderen Kathode zu betreiben. Vorteilhaft ist es mit dieser Betriebsweise möglich, eine hohe Langzeitstabilität und Produktselektivität der Elektrolyse zu erreichen.

Weitere Ausgestaltungsformen und weitere Merkmale der Erfindung werden anhand der folgenden Figuren näher erläutert. Es zeigen:
- Figur 1: einen Kohlenstoffdioxid-Elektrolyseur mit einer ersten Kathode und einer zweiten Kathode auf einem Substrat;
- Figur 2: eine Draufsicht auf das Substrat mit der ersten Kathode und der zweiten Kathode;
- Figur 3: eine Elektrolysezelle mit einer ersten Kathode und einer zweiten Kathode auf einem Substrat für den Flow-by Modus;
- Figur 4: eine Elektrolysezelle mit einer ersten Kathode und einer zweiten Kathode auf einem Substrat für den Flow-through Modus.

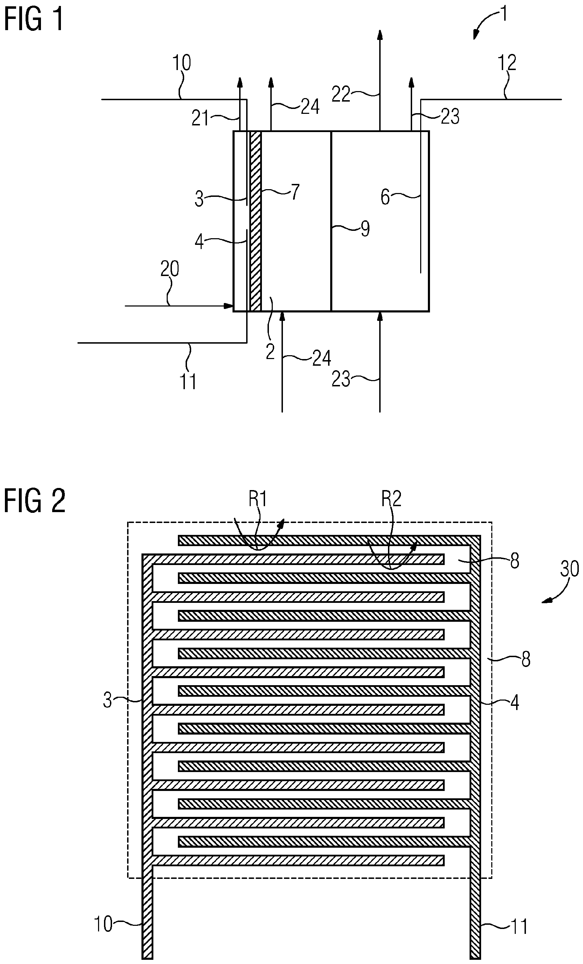

Figur 1 zeigt eine Ausgestaltung eines Kohlenstoffdioxid-Elektrolyseurs 1. Der Kohlenstoffdioxid-Elektrolyseur 1 umfasst einen Kathodenraum 2 und einen Anodenraum 5. Der Kathodenraum 2 und der Anodenraum 5 werden von einer Membran 9 voneinander getrennt. In dem Kathodenraum 2 ist eine erste Kathode 3 und eine zweite Kathode 4 angeordnet. Die erste Kathode 3 und die zweite Kathode 4 ist auf einem im Wesentlichen elektrisch isolierenden Substrat aufgebracht. Die erste Kathode 3 ist über eine erste elektrische Anbindung 10 elektrisch angeschlossen. Die zweite Kathode 4 ist über eine zweite elektrische Anbindung 11 elektrisch angeschlossen. In dem Anodenraum 5 ist eine Anode 6 angeordnet. Die Anode 6 ist über eine dritte elektrische Anbindung 12 elektrisch angeschlossen.

In den Kathodenraum 2 wird ein Edukt umfassend Kohlenstoffdioxid 20 zugeführt. An der ersten Kathode 3 wird das Edukt zu einem Zwischenprodukt über eine erste Reaktion R1 umgesetzt. An der zweiten Kathode 4 wird das Zwischenprodukt über eine zweite Reaktion R2 zu dem Wertprodukt umgesetzt. Das Wertprodukt 21 verlässt dann den Kathodenraum 2. In diesem Beispiel umfasst das Wertprodukt einen Kohlenwasserstoff, insbesondere Ethen.

In den Anodenraum 5 wird ein erster wässriger Elektrolyt 23 zugeführt. Dieser wird an der Anode 6 zu Sauerstoff 22 oxidiert. In den Kathodenraum 2 wird ein flüssiger zweiter Elektrolyt 24 zugeführt. Es ist möglich, dass der erste Elektrolyt 23 und der zweite Elektrolyt 24 identisch sind. Es ist ebenso denkbar, dass der erste Elektrolyt 23 und der zweite Elektrolyt 24 unterschiedliche Zusammensetzungen aufweisen.

Figur 2 zeigt eine Draufsicht auf ein Substrat, welches in diesem Beispiel als Gasdiffusionsschicht 8 ausgebildet ist. Das Substrat selbst weist in diesem Beispiel einen hohen elektrischen Widerstand auf, ist also nahezu nicht elektrisch leitend. Es ist aber ebenso denkbar, dass das Substrat als eine Gasdiffusionselektrode mit einer eine Isolationsschicht ausgestaltet ist. Figur 2 zeigt weiterhin eine erste Kathode 3 welche kammartig auf der Gasdiffusionsschicht 8 angeordnet ist. Figur 2 zeigt auch eine zweite Kathode 4 welche ebenfalls kammartig auf der Gasdiffusionsschicht 8 angeordnet ist. Die erste Kathode 3 und die zweite Kathode 4 sind zueinander verschränkt angeordnet. In anderen Worten wechseln sich die erste Kathode 3 und die zweite Kathode 4 auf dem Substrat 7, in diesem Fall auf der Gasdiffusionsschicht 8, ab. In diesem Beispiel umfasst die erste Kathode 3 Silber als Katalysator. Die zweite Kathode 4 in diesem Beispiel umfasst Kupfer als Katalysator. Figur 2 zeigt weiterhin, dass an der ersten Kathode 3 eine erste Reaktion R1 stattfindet. Als erste Reaktion R1 erfolgt in diesem Beispiel das Umsetzen des Kohlenstoffdioxids zu einem Zwischenprodukt. Das Zwischenprodukt ist in diesem Beispiel Kohlenstoffmonoxid. Das Kohlenstoffmonoxid wird dann in einer zweiten Reaktion R2 zu einem Kohlenwasserstoff, insbesondere Ethen, umgesetzt.

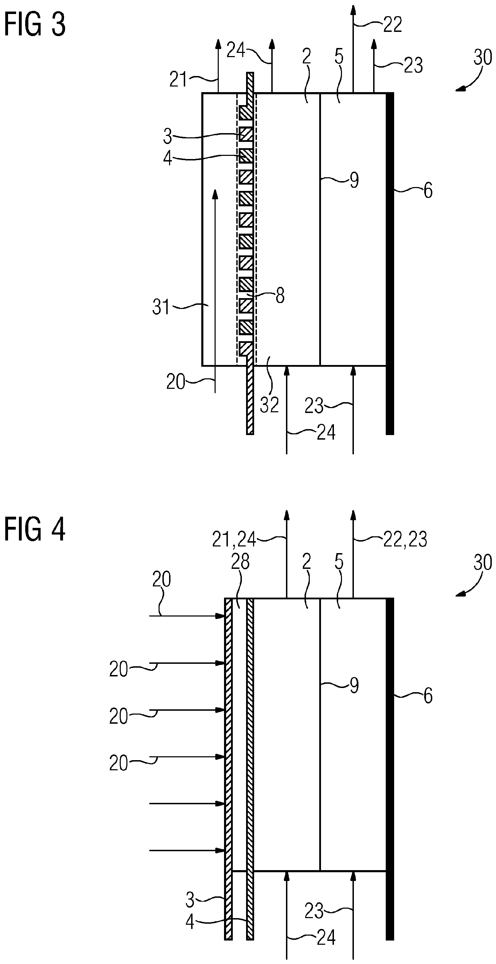

Figur 3 zeigt dasselbe Beispiel einer Elektrolysezelle 30 wie Figur 2 in einer Seitenansicht. Die Elektrolysezelle 30 umfasst einen Kathodenraum 2 und einen Anodenraum 5. Der Kathodenraum 2 und der Anodenraum 5 sind durch eine Membran 9 voneinander getrennt. In dem Anodenraum 5 ist eine Anode 6 angeordnet. In dem Kathodenraum 2 ist eine Gasdiffusionsschicht 8 angeordnet. Die Gasdiffusionsschicht 8 teilt den Kathodenraum 2 in einen ersten Kathodenteilraum 31, der auf der distalen Seite im Verhältnis zur Membran 9 liegt und einem zweiten Kathodenteilraum 32, der auf der näher liegenden Seite zur Membran 9 liegt. Die erste Kathode 3 und die zweite Kathode 4 sind in dem zweiten Kathodenteilraum 32 angeordnet. Die erste Kathode 3 und die zweite Kathode 4 sind in dieser Figur 3 seitlich geschnitten. Sie sind auf einer Gasdiffusionsschicht 8 als Substrat aufgebracht. Das Edukt umfassend Kohlenstoffdioxid 20 wird in den ersten Kathodenteilraum 31 geführt. Das Kohlenstoffdioxid strömt entlang der Gasdiffusionsschicht 8. Das Kohlenstoffdioxid wird an der ersten Kathode 3 zu Kohlenstoffmonoxid reduziert. Anschließend wird das Kohlenstoffmonoxid an der zweiten Kathode 4 zu einem Kohlenwasserstoff, insbesondere zu Ethen, umgewandelt. Das Wertprodukt, in diesem Fall Ethen, wird zusammen mit nicht umgesetztem Kohlenstoffdioxid aus dem ersten Die Kathodenteilraum 31 geführt. Dieses Beispiel beschreibt den sogenannten Flow-by Modus.

Figur 4 zeigt eine Elektrolysezelle 30 in seitlicher Ansicht mit einer alternativen Anordnung der ersten Kathode 3 und der zweiten Kathode 4. Die Elektrolysezelle 30 umfasst wiederum einen Kathodenraum 2 und einen Anodenraum 5. Der Kathodenraum 2 und der Anodenraum 5 werden mittels einer Membran 9 voneinander getrennt. In dem Anodenraum 5 ist eine Anode 6 angeordnet. In dem Kathodenraum 2 ist eine Gasdiffusionselektrode 28 umfassend eine Gasdiffusionsschicht 8 als Substrat angeordnet. Die erste Kathode 3 ist auf der von der Membran 9 entfernten Seite angeordnet. Die zweite Kathode 4 ist auf der der Membran 9 zugewandten Seite angeordnet. Kohlenstoffdioxid strömt orthogonal auf die erste Kathode 3 zu. An der ersten Kathode 3 wird das Kohlenstoffdioxid zu Kohlenstoffmonoxid reduziert. Das Kohlenstoffmonoxid wird dann durch die Gasdiffusionselektrode 28 hindurchgedrückt. An der zweiten Kathode 4 wird das Kohlenstoffmonoxid dann zu dem Wertprodukt, insbesondere zu einem Kohlenwasserstoff, besonders bevorzugt zu Ethen, umgewandelt. Das Wertprodukt 21 tritt dann flüssig oder gasförmig als Bläschen in den Elektrolyt 24 in den Kathodenraum 2 ein. In dem Kathodenraum 2 steigt es dann nach oben und kann über eine Leitung zusammen mit dem Elektrolyten aus dem Kathodenraum 2 entnommen werden. An der Anode 6 wird der wässrige Elektrolyt 23 zu Sauerstoff 22 reduziert. Der Sauerstoff 22 verlässt den Anodenraum 5 zusammen mit dem Elektrolyten über eine Leitung.

### Bezugszeichenliste

- 1: Kohlenstoffdioxid-Elektrolyseur
- 2: Kathodenraum
- 3: erste Kathode
- 4: zweite Kathode
- 5: Anodenraum
- 6: Anode
- 7: Substrat
- 8: Gasdiffusionsschicht
- 9: Membran
- 10: erste elektrische Anbindung
- 11: zweite elektrische Anbindung
- 12: dritte elektrische Anbindung
- 20: Kohlenstoffdioxid
- 21: Wertprodukt
- 22: Sauerstoff
- 23: erster Elektrolyt
- 24: zweiter Elektrolyt
- 28: Gasdiffusionselektrode
- 30: Elektrolysezelle
- 31: erster Kathodenteilraum
- 32: zweiter Kathodenteilraum
- R1: erste Reaktion
- R2: zweite Reaktion

## Patentansprüche

1. Kohlenstoffdioxid-Elektrolyseur (1) zum elektrochemischen Umsetzen von Kohlenstoffdioxid (20) zu wenigstens einem Wertprodukt (21) mit
- einem Anodenraum (5) mit einer Anode (6),
- einem Kathodenraum (2) mit einer ersten Kathode (3) und einer zweiten Kathode (4),
- einer Membran (9) zwischen dem Anodenraum (5) und dem Kathodenraum (2), wobei
die erste Kathode (3) und die zweite Kathode (4) auf einem Substrat (7) angeordnet sind, wobei der elektrische Widerstand des Substrats (7) höher ist, als der elektrische Widerstand der ersten Kathode (3) und der elektrische Widerstand der zweiten Kathode (4).

2. Kohlenstoffdioxid-Elektrolyseur (1) nach Anspruch 1, wobei die erste Kathode (3) ein erstes katalytisches Material umfasst und die zweite Kathode (4) ein zweites katalytisches Material, wobei das erste katalytische Material und das zweite katalytische Material in der Zusammensetzung unterschiedlich sind.

3. Kohlenstoffdioxid-Elektrolyseur (1) nach Anspruch 2, wobei das erste und/oder das zweite katalytische Material zusammengesetzt ist aus der Gruppe der folgenden Elemente: Silber, Gold, Zink, Zinn, Wismuth und/oder Kupfer.

4. Kohlenstoffdioxid-Elektrolyseur (1) nach einem der vorhergehenden Ansprüche, wobei das Substrat (7) als eine Gasdiffusionsschicht (8) ausgestaltet ist.

5. Kohlenstoffdioxid-Elektrolyseur(1) nach Anspruch 4, wobei die Gasdiffusionsschicht (8), die erste Kathode (3) und die zweite Kathode (4) als eine Gasdiffusionselektrode ausgestaltet sind.

6. Kohlenstoffdioxid-Elektrolyseur (1) nach einem der vorhergehenden Ansprüche, wobei die erste Kathode (3) und die zweite Kathode (4) auf derselben Seite des Substrates (7) angeordnet sind.

7. Kohlenstoffdioxid-Elektrolyseur (1) nach einem der Ansprüche 1 bis 5, wobei die erste Kathode (3) und die zweite Kathode (4) auf entgegengesetzten Seiten des Substrates (7) angeordnet sind.

8. Kohlenstoffdioxid-Elektrolyseur (1) nach einem der vorhergehenden Ansprüche, wobei die erste Kathode (3) und/oder die zweite Kathode (4) als Kammelektroden ausgestaltet sind.

9. Kohlenstoffdioxid-Elektrolyseur (1) nach Anspruch 8, wobei eine erste Kammstruktur der ersten Kathode (3) verschränkt mit einer zweiten Kammstruktur der zweiten Kathode (4) angeordnet sind.

10. Kohlenstoffdioxid-Elektrolyseur (1) nach einem der vorhergehenden Ansprüche, wobei die erste Kathode (3) und die zweite Kathode (4) getrennt voneinander kontaktiert ausgestaltet sind.

11. Verfahren zum Betreiben eines Kohlenstoffdioxid-Elektrolyseurs (1) mit folgenden Schritten:
- Bereitstellen eines Kohlenstoffdioxid-Elektrolyseurs (1) mit einem Anodenraum (5) mit einer Anode (6), einem Kathodenraum (2) mit einer ersten Kathode (3) und einer zweiten Kathode (4), einer Membran (9) zwischen dem Anodenraum (5) und dem Kathodenraum (2), wobei der elektrische Widerstand des Substrats (7) höher ist, als der elektrische Widerstand der ersten Kathode (3) und der elektrische Widerstand der zweiten Kathode (4),
- Zuführen des Edukts, insbesondere Kohlenstoffdioxid (20), zu dem Substrat (7),
- Umsetzen des Edukts zu einem Zwischenprodukt an der ersten Kathode (3),
- Umsetzen des Zwischenprodukts zu einem Wertprodukt (21) an der zweiten Kathode (4),
- Ausführen des Wertprodukts (21) aus dem Kohlenstoffdioxid-Elektrolyseur (1).

12. Verfahren nach Anspruch 11, wobei die erste Kathode (3) und die zweite Kathode (4) unabhängig voneinander steuerbar sind.

13. Verfahren nach einem der Ansprüche 11 oder 12, wobei das Zwischenprodukt Kohlenstoffmonoxid, Formiat und/oder Ameisensäure umfasst.

14. Verfahren nach einem der Ansprüche 11 bis 13, wobei die erste Kathode (3) und zweite Kathode (4) auf derselben Seite einer Gasdiffusionsschicht (8) als Substrat (7) angeordnet sind und das gasförmige Eduktgas parallel zu der Gasdiffusionsschicht (8) geführt wird.

15. Verfahren nach einem der Ansprüche 11 oder 12, wobei die erste Kathode (3) und zweite Kathode (4) auf entgegengesetzten Seiten einer Gasdiffusionschicht (8) angeordnet sind und das gasförmige Eduktgas orthogonal zur Gasdiffusionsschicht (8) auf diese zu geführt wird.
